(19) Europäisches Patentamt
European Patent Office
Office européen des brevets

(11) **EP 3 714 253 B1**

(12) **EUROPÄISCHE PATENTSCHRIFT**

(45) Veröffentlichungstag und Bekanntmachung des Hinweises auf die Patenterteilung:
**14.08.2024 Patentblatt 2024/33**

(21) Anmeldenummer: **18795578.6**

(22) Anmeldetag: **30.10.2018**

(51) Internationale Patentklassifikation (IPC):
**G01N 9/00** *(2006.01)*

(52) Gemeinsame Patentklassifikation (CPC):
**G01N 9/002;** G01F 1/8436; G01F 1/8477;
**G01N 2009/006**

(86) Internationale Anmeldenummer:
**PCT/EP2018/079634**

(87) Internationale Veröffentlichungsnummer:
**WO 2019/096576 (23.05.2019 Gazette 2019/21)**

(54) **VERFAHREN ZUM BERECHNEN DER DICHTE EINES MEDIUMS, WELCHES IN MINDESTENS EINEM SCHWINGFÄHIGEN MESSROHR EINES DICHTEMESSERS GEFÜHRT IST**

METHOD FOR CALCULATING THE DENSITY OF A MEDIUM WHICH IS CONDUCTED IN AT LEAST ONE VIBRATABLE MEASURING TUBE OF A DENSITY METER

PROCÉDÉ DE CALCUL DE LA DENSITÉ D'UN FLUIDE PASSÉ DANS AU MOINS UN TUBE DE MESURE APTE À OSCILLER COMPRIS DANS UN DENSIMÈTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.11.2017 DE 102017127266**

(43) Veröffentlichungstag der Anmeldung:
**30.09.2020 Patentblatt 2020/40**

(73) Patentinhaber: **Endress+Hauser Flowtec AG 4153 Reinach (CH)**

(72) Erfinder: **RIEDER, Alfred 84032 Landshut (DE)**

(74) Vertreter: **Hahn, Christian et al Endress+Hauser Group Services (Deutschland)AG +Co. KG Colmarer Straße 6 79576 Weil am Rhein (DE)**

(56) Entgegenhaltungen:
**WO-A1-94/21999 US-A1- 2016 356 686**

**Beschreibung**

Die vorliegende Erfindung betrifft ein Verfahren zum Berechnen einer Dichte eines Mediums.

Dichtemesser mit schwingfähigen Messrohren sind an sich bekannt und in einer Vielzahl von Schutzrechten beschrieben, unter anderem in US 2016/356686 A1 und WO 94121999A1.

US 4,262,523 A1 offenbart einen Gasdichtemesser. DE 10 2015 122 661 A1 offenbart ein Verfahren zum Ermitteln der Dichte einer mit Gas beladenen Flüssigkeit.

DE 10 2014 019 396 A1 offenbart ein Verfahren zum Messen der Dichte eines Fluids mit einer Kompensation von Einflüssen der Lage des Durchflussmessers.

Die Anmeldung DE 10 2016 112 600.4 beschreibt ein Verfahren zur Dichtemessung unter Berücksichtigung von Temperatureffekten.

Die Anmeldung DE 10 2004 056 235 A1 beschreibt ein Verfahren zur Dichtemessung unter Berücksichtigung einer Volumenvergrößerung des Messrohrs aufgrund des Mediendrucks.

Andererseits gibt es eine installierte Basis von Dichterechnern, häufig Flowcomputer genannt, welche einen Frequenzsignaleingang aufweisen, über von einem Dichtemesser dessen Nutzmodeeigenfrequenz des Messrohrs empfangen, um dann unter Verwendung von bei der Inbetriebnahme hinterlegten Koeffizienten, welche dem Schwingungsverhalten des Dichtemessers bei Standardbedingungen entsprechen, einen Dichtemesswert zu berechnen. Derartige Dichterechner sind jedoch oft nur mit großem Aufwand in die Lage zu versetzen, einen genaueren Dichtemesswert unter Berücksichtigung weiterer Einflussgrößen nach inzwischen verfügbaren Algorithmen zu berechnen, teils weil ihnen die erforderlichen Signaleingänge fehlen, teils weil die Möglichkeiten zu einer entsprechenden Programmierung nicht ohne weiteres gegeben sind. Damit bleiben die Anlagen, die einen solchen Dichterechner verwenden hinter den Möglichkeiten moderner Messtechnik zurück, und das sogar dann, wenn inzwischen modernere Dichtemesser in der Anlage installiert sind. Es ist daher die Aufgabe der vorliegenden Erfindung, hier Abhilfe zu schaffen.

Die Aufgabe wird erfindungsgemäß gelöst durch das Verfahren zum Berechnen der Dichte eines Mediums gemäß dem Patentanspruch 1.

Das erfindungsgemäße Verfahren zum Berechnen der Dichte eines Mediums, welches in mindestens einem schwingfähigen Messrohr eines Dichtemessers geführt ist, umfasst: Anregen von Biegeschwingungen des Messrohrs in einer Biegeschwingungsnutzmode bei einer Nutzmodearbeitsfrequenz, wobei die Nutzmodearbeitsfrequenz von der Dichte eines in dem Messrohr geführten Mediums sowie von mindestens einer Störgröße abhängt; Ermitteln eines charakteristischen Wertes der Nutzmodearbeitsfrequenz; Ermitteln eines die Störgröße repräsentierenden Wertes; Berechnen eines korrekten Dichtewertes des Mediums in Abhängigkeit des charakteristischen Wertes der Nutzmodearbeitsfrequenz und des die mindestens eine Störgröße repräsentierenden Wertes; wobei das Verfahren erfindungsgemäß weiterhin umfasst:

Berechnen eines charakteristischen Werts der Standardfrequenz als Funktion des korrekten Dichtewertes, wobei die Standardfrequenz jene Frequenz ist, die bei einer Berechnung der Dichte mittels einer frequenzabhängigen Standardfunktion, die nicht von der Störgröße abhängig ist, den korrekten Dichtewert ergibt; Bereitstellen eines Signals, welches die Standardfrequenz repräsentiert, wobei das bereitgestellte Signal einen Oszillator steuert, der in Abhängigkeit von dem bereitgestellten Signal ein Oszillatorsignal ausgibt, welches mit der Standardfrequenz schwingt; und Berechnen der Dichte mittels einer Verarbeitungseinheit, welche einen Frequenzeingang aufweist, an dem das Oszillatorsignal anliegt, welches mit der Standardfrequenz schwingt, wobei Verarbeitungseinheit die Dichte mittels der Standardfunktion berechnet.

Der charakteristische Wert einer Frequenz f ist entweder ihr Wert f oder ihre Periodendauer t = 1/f.

In einer Weiterbildung der Erfindung beeinflusst die mindestens eine Störgröße eine effektive Steifigkeit des Messrohrs bezüglich der Biegeschwingungsnutzmode und/oder das Messrohrvolumen.

In einer Weiterbildung der Erfindung umfasst die mindestens eine Störgröße einen im Messrohr herrschenden Druck und/oder eine Temperatur des Messrohrs.

In einer Weiterbildung der Erfindung ist die mindestens eine Störgröße eine Viskosität eine Strömungsgeschwindigkeit, eine Gasbeladung, ein Feststoffanteil und/oder eine Kompressibilität des im Messrohr geführten Mediums.

In einer Weiterbildung der Erfindung ist die mindestens eine Störgröße eine von außen auf das Messgerät einwirkende Umgebungstemperatur und/oder eine Kraft und/oder ein Biegemoment.

In einer Weiterbildung der Erfindung umfasst die Nutzmodearbeitsfrequenz eine Nutzmodeeigenfrequenz $f_1$ oder eine Frequenz, bei der sich ein Phasenwinkel mit konstantem Betrag $|\varphi|$ zwischen einer Erregerkraft und der Auslenkung des Messrohrs einstellt für den gilt $45° - \Delta\varphi \leq \varphi \leq 45° + \Delta\varphi$ Frequenz, wobei $\Delta\varphi \leq 10°$.

In einer Weiterbildung der Erfindung umfasst die Standardfunktion ein Polynom in t = 1/f und/oder in $t^2 = 1/f^2$.

Ein Messgerät, das eingerichtet ist, zur Durchführung des erfindungsgemäßen Verfahrens beizutragen, umfasst eine Betriebs- und Auswerteschaltung; und einen Messaufnehmer vom Vibrationstyp zum Ermitteln der Dichte des eines Mediums mit: mindestens einem schwingfähigen Messrohr zum Führen des Mediums; mindestens einem Erreger zum Anregen von Biegeschwingungen des Messrohrs; und mindestens einem Schwingungssensor zum Erfassen der Biegeschwingungen; wobei die Betriebs- und Auswerteschaltung an den mindestens einen Erreger um den Erreger mit einem Erregersignal zu treiben; die Betriebs- und Auswerteschaltung an den mindestens einen Erreger sowie an den mindestens einen Schwingungssensor des Messaufnehmers angeschlossen ist; wobei erfindungsgemäß die Betriebs- und Auswerteschaltung dazu eingerichtet ist, das erfindungsgemäße Verfahren durchzuführen.

In einer Weiterbildung weist das Messgerät einen Signalausgang auf zum Bereitstellen eines Ausgangssignal Signals, welches die Standardfrequenz repräsentiert.

In einer Weiterbildung umfasst das Ausgangssignal ein analoges Signal, welches mit der Standardfrequenz schwingt.

Die Erfindung wird nun anhand der in den Zeichnungen dargestellten Ausführungsbeispiele näher erläutert.

Es zeigt:

Fig. 1: eine schematische Darstellung eines Ausführungsbeispiels eines Messgerätes, das eingerichtet ist, zur Durchführung des erfindungsgemäßen Verfahrens beizutragen;

Fig. 2: eine schematische Darstellung von Symmetrien des Ausführungsbeispiels eines Messgerätes aus Fig. 1;

Fig. 3: eine schematische Darstellung der Beschaltung von Erregeranordnung und Sensoranordnungen des Ausführungsbeispiels des Messgerätes aus Fig. 1;

Fig. 4: eine Prinzipskizze zur Durchführung des erfindungsgemäßen Verfahrens; und

Fig. 5: ein Flussdiagramm zur Durchführung des erfindungsgemäßen Verfahrens.

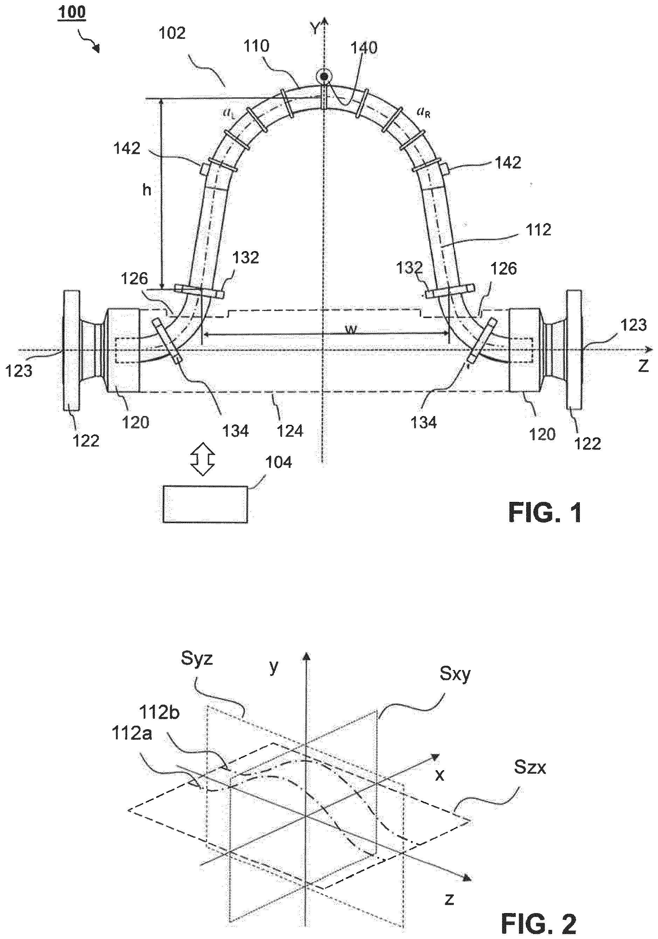

Das in Fig. 1 dargestellte Ausführungsbeispiel eines Messgerätes 100, das eingerichtet ist, zur Durchführung des erfindungsgemäßen Verfahrens beizutragen umfasst einen Messaufnehmer 102 und eine Betriebs- und Auswerteschaltung 104. Der Messaufnehmer 102 umfasst ein Paar von gebogenen Messrohren 110. Die Messrohre 110 erstrecken sich zwischen einem einlassseitigen Sammler 120 und einem auslassseitigen Sammler 120, und sind mit diesen fest verbunden, beispielsweise durch Einwalzen, Schweißen, oder Löten. Zwischen den Sammlern 120 erstreckt sich ein massives Trägerrohr 124, welches mit beiden Sammlern fest verbunden ist, wodurch die Sammler 120 starr miteinander gekoppelt sind. Das Trägerrohr 124 weist an seiner Oberseite Öffnungen 126 auf, durch welche die Messrohre 110 von den Sammlern 120 aus dem Trägerrohr 124 heraus und wieder zurückgeführt sind.

Die Sammler 120 weisen endständig jeweils einen Flansch 122 auf, mittels dessen das Coriolis-Massedurchflussmessgerät bzw. Dichtemessgerät in einer Rohrleitung zu installieren ist. Durch zentrale Öffnungen 123 in den Flanschen 122 ist ein Massestrom durch die Messrohre 110 zu führen, um den Massestrom bzw. dessen Dichte zu messen.

Anhand von Fig. 2 sollen geeignete Symmetrieeigenschaften von Messaufnehmern vorgestellt werden. Hierzu sind Messrohrmittelachsen 112a, 112b der beiden Messrohre 110 dargestellt, welche den Oszillator bilden. Die Messrohrmittelachsen 112a, 112b verlaufen symmetrisch zu einer ersten Spiegelebene Syz, welche zwischen den Messrohren verläuft. Die Messrohrmittelachsen verlaufen weiterhin symmetrisch zu einer zweiten Spiegelebene Sxy, der so genannten Messrohrquerebene, welche senkrecht zur ersten Spiegelebene Syz verläuft. In der Messrohrquerebene, liegen Scheitelpunkte der Messrohre bzw. der Messrohrmittelachsen. Die Messrohrachsen 112a, 112b verlaufen vorzugsweise in Ebenen, die parallel zur ersten Spiegelebene verlaufen. Bezüglich einer dritte Ebene Szx, welche senkrecht zur ersten Spiegelebene und zur zweiten Spiegelebene verläuft, und in welcher die Messrohrachsen 112a, 112b in den Sammlern verlaufen ist keine Symmetrie der Messrohre gegeben. Die Schnittlinie zwischen der ersten Spiegelebene Syz und der dritten Ebene definiert eine Z-Achse eines Koordinatensystems des Messaufnehmers. Die Schnittlinie zwischen der zweiten Spiegelebene Sxy und der dritten Ebene Szx definiert eine X-Achse des Koordinatensystems, und die Schnittlinie zwischen ersten Spiegelebene Syz und der zweiten Spiegelebene definiert die Y-Achse des Koordinatensystems. Mit den solchermaßen definierten Koordinaten wenden wir uns wieder Fig.1 zu.

Die Messrohre 110 bilden paarweise einen Oszillator, der insbesondere eine erste zur Messrohrquerebene spiegelsymmetrische Biegeschwingungsmode mit einer ersten Eigenfrequenz f1 und eine zweite zur Messrohrquerebene spiegelsymmetrische Biegeschwingungsmode mit einer zweiten Eigenfrequenz f3 aufweist, bei denen die Messrohre gegenphasig zueinander in X-Richtung schwingen. Zum Anregen der Biegeschwingungsmoden der Messrohre in X-Richtung ist spiegelsymmetrisch zur Messrohrquerebene eine elektrodynamische Erregeranordnung 140 vorgesehen, die beispielsweise eine Tauchspule an einem ersten Messrohr und einen Tauchkörper am gegenüberliegenden zweiten Messrohr umfasst. Die Erregeranordnung ist hier an der Außenseite des Messrohrbogens angeordnet, was insbesondere für die Anregung der zweiten zur Messrohrquerebene spiegelsymmetrischen Biegeschwingungsmode vorteilhaft ist, wie in der noch unveröffentlichten Patentanmeldung DE 10 2016 109 251.7 dargelegt ist. Grundsätzlich kann die Erregeranordnung 140 aber auch an der Innenseite des Messrohrbogens angeordnet sein.

Zum Erfassen der Schwingungen der Messrohre sind symmetrisch zur Messrohrquerebene Sxy Sensoranordnungen 142 vorgesehen, die jeweils als induktive Anordnung mit einer Tauchspule an einem Rohr und einem Tauchkörper am anderen Rohr gestaltet sind. Einzelheiten dazu sind dem Fachmann bekannt, und brauchen hier nicht näher erläutert zu werden.

Zur Beeinflussung der Schwingungseigenschaften sind die Messrohre 110 einlassseitig und auslassseitig jeweils mit Kopplern 132, 134 verbunden, wobei durch die Position der beiden inneren der Koppler 132, also jener, welche einlassseitig bzw. auslassseitig jeweils am weitesten vom entsprechenden Sammler 120 entfernt sind, eine freie Schwingungslänge eines durch die beiden Messrohre 110 gebildeten Oszillators festgelegt ist. Diese freie Schwingungslänge beeinflusst die Biegeschwingungsmoden des Oszillators, insbesondere deren Eigenfrequenzen, mit welchen der Oszillator vorzugsweise anzuregen ist. Äußere Koppler 134, die jeweils zwischen den inneren Knotenplatten 132 und den Sammlern 120 angeordnet sind, dienen insbesondere dazu, weitere Schwingungsknoten zu definieren.

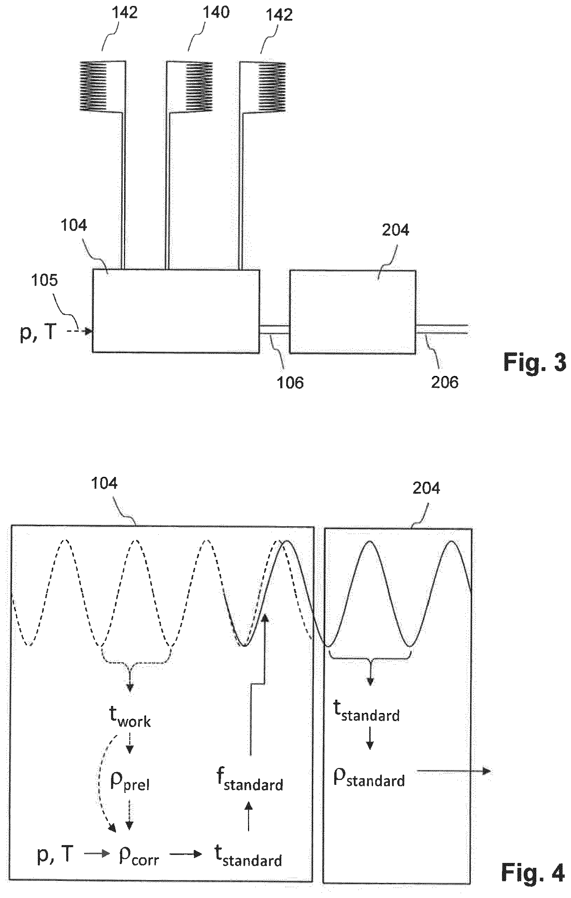

Wie in Fig. 3 schematisch dargestellt ist, sind die Spule der Erregeranordnung 140 sowie die Spulen der Sensoranordnungen 142 an die Betriebs- und Auswerteschaltung 104 angeschlossen. Die Betriebs- Auswerteschaltung 104 ist dazu eingerichtet, die Erregeranordnung mit einem Erregersignal zu speisen, welches eine Arbeitsfrequenz aufweist, die von der Dichte eines in den Messrohren befindlichen Mediums abhängt. Die Betriebs- und Auswerteschaltung ist weiterhin dazu eingerichtet, Sensorsignale der Sensoranordnungen zu empfangen, und auszuwerten. Sofern die Arbeitsfrequenz eine Nutzmodeeigenfrequenz einer Biegeschwingungsnutzmode sein soll, ist die Betriebs- und Auswerteschaltung dazu eingerichtet die Arbeitsfrequenz zu variieren, um ein maximales Verhältnis von Sensorsignalen zu finden. Die zugehörige Arbeitsfrequenz bildet dann die Basis für die Dichteberechnung. In einer anderen Ausgestaltung ist die Betriebs- und Auswerteschaltung 104 dazu eingerichtet, die Arbeitsfrequenz zu variieren, um einen definierten Phasenwinkel zwischen den Sensorsignalen und dem Erregersignal zu finden, beispielsweise einen Phasenwinkel von etwa 45°, wobei wiederum die zugehörige Arbeitsfrequenz eine Basis für die Dichteberechnung bildet. Zusätzlich kann die Betriebsund Auswerteschaltung 104 Signaleingänge 105 für den Eingang von Störgrößenwerten, wie Druck und/oder Temperatur aufweisen.

Wie in der Prinzipskizze in Fig. 4 anhand eines Beispiels zur Arbeitsweise der Betriebs- und Auswerteschaltung 104 dargestellt, wird zunächst anhand des (gestrichelt dargestellten) Erregersignals eine Periodendauer $t_{work}$ der Arbeitsfrequenz ermittelt. Unter zu Hilfenahme von aktuellen Werten von Störgrößen, wie p und T wird aus der Periodendauer $t_{work}$ entweder direkt oder über einen vorläufigen Dichtewert $\rho_{prel}$, der die Störgrößen noch nicht berücksichtigt, ein korrigierter Dichtewert berechnet $\rho_{corr}$. Anschließend wird auf Basis der korrigierten Dichte $\rho_{corr}$ eine Standardperiodendauer berechnet, die bei Berechnung der Dichte mit einer Standardfunktion die von der Periodendauer abhängt und unabhängig von den Störgößen ist, wiederum die korrigierte Dichte $\rho_{corr}$ ergibt. Ein Signalgenerator der Betriebs- und Auswertschaltung 104 wird angesteuert um ein der Standardperiodendauer $t_{standard}$ entsprechendes Frequenzsignal mit der Frequenz $f_{standard}$ zu generieren und an dem in Fig. 3 dargestellten Frequenzausgang 106 bereitzustellen. Dieses (mit durchgezogener Linie dargestellte) Frequenzsignal liegt am Signaleingang eines Dichterechners 204 an, in dem die Standardfunktion implementiert ist. Im Dichterechner wird die Periodendauer des Frequenzsignals ermittelt, die der Standardperiodendauer $t_{standard}$ entsprechen sollte. Eine Dichteberechnung auf Basis der Standardperiodendauer mit der Standardfunktion führt zu einer Standarddichte $\rho_{standard}$, deren Wert mit dem Wert der korrigierten Dichte $\rho_{corr}$ übereinstimmt, und an einer Schnittstelle 206 ausgegeben werden kann.

Im Ergebnis kann auf diese Weise ein an sich veralteter Dichterechner noch Dichtewert bereitstellen, die modernsten Erkenntnissen der Messwertbestimmung genügen, ohne dass in den Dichterechner eingegriffen werden muss.

Wie der korrekte Dichtewert $\rho_{corr}$ als Funktion der Arbeitsfrequenz und der Störgrößen berechnet wird, ist nicht Gegenstand der vorliegenden Erfindung, dem Fachmann sind hierzu verschiedene Ansätze aus dem Stand der Technik bekannt, beispielsweise aus den Schutzrechten US 4,262,523 A1, DE 10 2015 122 661 A1, DE 10 2014 019 396 A1, DE 10 2016 112 600.4 und DE 10 2004 056 235 A1. Erfindungsgemäß soll lediglich eine dem korrigierten Dichtewert $\rho_{corr}$ entsprechende Standardfrequenz, die in den meisten Fällen von der Arbeitsfrequenz abweichen dürfte, ermittelt und signalisiert werden damit eine Berechnung mit einer frequenzabhängigen Standardfunktion den korrekten Dichtewert $\rho_{corr}$ ergibt.

Die Standardfunktion, mit welcher ein Standarddichtewert $\rho_{standard}$ störgrößenunabhängig zu ermitteln ist, kann beispielsweise die folgende Form aufweisen:

$$\rho_{standard} = k_0 + k_1 \cdot t_{standard} \, ,$$

wobei die Standardperiodendauer $t_{standard}$ der Kehrwert der zu ermittelnden und zu signalisierenden Standardfrequenz $f_{standard}$ ist.

Insofern als der Standarddichtewert $\rho_{standard}$ dem korrekten Dichtewert $\rho_{corr}$ entsprechen soll, ist die Standardfrequenz damit gegeben als:

$$f_{standard} = \frac{k_1}{\rho_{corr} - k_0} \, ,$$

Die Betriebs- und Auswerteschaltung weist einen Signalgenerator auf, der angesteuert wird um ein Schwingungssignal mit der Standardfrequenz $f_{standard}$ am Frequenzausgang 106 bereitzustellen.

Eine alternative Standardfunktion, mit welcher ein Standarddichtewert $\rho_{standard}$ störgrößenunabhängig zu ermitteln ist, hat beispielsweise die folgende Form:

$$\rho_{standard} = k_0 + k_2 \cdot t_{standard}{}^2 \, ,$$

wobei die Standardperiodendauer $t_{standard}$ der Kehrwert der zu ermittelnden und zu signalisierenden Standardfrequenz $f_{standard}$ ist.

Da auch hier der Standarddichtewert $\rho_{standard}$ dem korrekten Dichtewert $\rho_{corr}$ entsprechen soll, ist in diesem Fall die Standardfrequenz gegeben als:

$$f_{standard} = \sqrt{\frac{k_1}{\rho_{corr} - k_0}} \, .$$

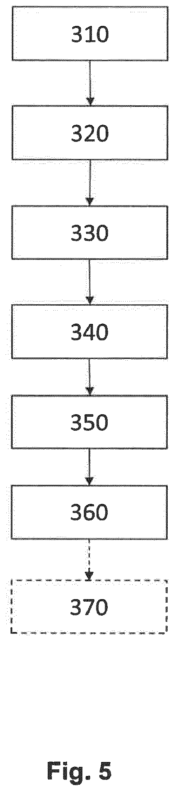

Fig. 5 zeigt noch einmal eine Folge von Verfahrensschritten gemäß einem Ausführungsbeispiel eines erfindungsgemäßen Verfahrens 300.

In einem ersten Schritt 310 erfolgt das Anregen von Biegeschwingungen des Messrohrs in einer Biegeschwingungsnutzmode bei einer Nutzmodearbeitsfrequenz, wobei die Nutzmodearbeitsfrequenz beispielsweise die Nutzmodeeigenfrequenz ist, die durch Maximierung des Verhältnisses zwischen Amplituden von Sensorsignalen und Erregerleistung gefunden wird.

Anschließend folgt einem zweiten Schritt 320 folgt das Bestimmen einer Periodendauer der Nutzmodearbeitsfrequenz als dessen charakteristischer Größe.

Im nächsten Schritt 330 folgt das Ermitteln eines eine Störgröße repräsentierenden Wertes. Die kann beispielsweise den Empfang eines Druckmesswertes umfassen, über den sich eine druckabhängige Versteifung des Messrohrs berechnen lässt.

Unter Berücksichtigung des Effekts der Störgröße erfolgt im nächsten Schritt 340 die Berechnung eines korrekten Dichtewertes $\rho_{corr}$ des Mediums im Messrohr in Abhängigkeit des Wertes der Nutzmodearbeitsfrequenz und des die mindestens eine Störgröße repräsentierenden Wertes.

Ausgehend vom korrekten Dichtewert $\rho_{corr}$ erfolgt das Berechnen eines Werts der Standardfrequenz 350, wobei die Standardfrequenz jene Frequenz ist, die bei einer Berechnung einer Standarddichte $\rho_{standard}$ mittels einer frequenzabhängigen Standardfunktion, die nicht von der Störgröße abhängig ist, den korrekten Dichtewert $\rho_{corr}$ ergibt.

Schließlich folgt das Signalisieren 360 der ermittelten Standardfrequenz signalisiert, beispielsweise durch ein Oszillatorsignal, welches mit der Standardfrequenz schwingt und an einem Frequenzausgang bereitgestellt wird.

Das Oszillatorsignal wird von einem Dichterechner empfangen und zum Berechnen 370 eines korrekten Dichtewertes $\rho_{corr}$ mittels einer Standardfunktion verwendet.

**Patentansprüche**

1. Verfahren (300) zum Berechnen der Dichte eines Mediums, welches in mindestens einem schwingfähigen Messrohr eines Dichtemessers geführt ist, umfassend:

   Anregen (310) von Biegeschwingungen des Messrohrs in einer Biegeschwingungsnutzmode bei einer Nutzmodearbeitsfrequenz, wobei die Nutzmodearbeitsfrequenz von der Dichte eines in dem Messrohr geführten Mediums sowie von mindestens einer Störgröße abhängt;
   Ermitteln (320) eines charakteristischen Wertes der Nutzmodearbeitsfrequenz;
   Ermitteln (330) eines die Störgröße repräsentierenden Wertes;
   Berechnen (340) eines korrekten Dichtewertes des Mediums in Abhängigkeit des charakteristischen Wertes der Nutzmodearbeitsfrequenz und des die mindestens eine Störgröße repräsentierenden Wertes;
   **dadurch gekennzeichnet, dass** das Verfahren weiterhin umfasst:

   Berechnen (350) eines charakteristischen Werts der Standardfrequenz als Funktion des korrekten Dichtewertes, wobei die Standardfrequenz jene Frequenz ist, die bei einer Berechnung der Dichte mittels einer frequenzabhängigen Standardfunktion, die nicht von der Störgröße abhängig ist, den korrekten Dichtewert ergibt;
   Bereitstellen (360) eines Signals, welches die Standardfrequenz repräsentiert, wobei das bereitgestellte Signal einen Oszillator steuert, der in Abhängigkeit von dem bereitgestellten Signal ein Oszillatorsignal ausgibt, welches mit der Standardfrequenz schwingt; und
   Berechnen (370) der Dichte mittels einer Verarbeitungseinheit, welche einen Frequenzeingang aufweist, an dem das Oszillatorsignal anliegt, welches mit der Standardfrequenz schwingt, wobei Verarbeitungseinheit die Dichte mittels der Standardfunktion berechnet.

2. Verfahren nach Anspruch 1, wobei die mindestens eine Störgröße eine effektive Steifigkeit des Messrohrs bezüglich der Biegeschwingungsnutzmode und/oder das Messrohrvolumen beeinflusst.

3. Verfahren nach Anspruch 2, wobei die mindestens eine Störgröße einen im Messrohr herrschenden Druck und/oder eine Temperatur des Messrohrs umfasst.

4. Verfahren nach Anspruch 1, wobei die mindestens eine Störgröße eine Viskosität eine Strömungsgeschwindigkeit, eine Gasbeladung und/oder eine Kompressibilität des im Messrohr geführten Mediums ist.

5. Verfahren nach einem der vorherigen Ansprüche, wobei die mindestens eine Störgröße eine von außen auf das Messgerät einwirkende Umgebungstemperatur und/oder eine Kraft und/oder ein Biegemoment ist.

6. Verfahren nach einem der vorgehenden Ansprüche, wobei die Nutzmodearbeitsfrequenz eine Nutzmodeeigenfrequenz f1 umfasst oder eine Frequenz, bei der sich ein Phasenwinkel mit konstantem Betrag $|\varphi|$ zwischen einer Erregerkraft und der Auslenkung des Messrohrs einstellt für den gilt $45° - \Delta\varphi \leq \varphi \leq 45° + \Delta\varphi$ Frequenz, wobei $\Delta\varphi \leq 10°$.

7. Verfahren nach einem der vorhergehenden Ansprüche, wobei die Standardfunktion ein Polynom in $t = 1/f$ oder in $t^2 = 1/f^2$ umfasst, wobei f eine Frequenz ist und t die zugehörige Periodendauer.

**Claims**

1. Method (300) for calculating the density of a medium which is guided in at least one oscillating measuring tube of a density meter:

   Excitation (310) of bending vibrations of the measuring tube in a bending vibration useful mode at a useful mode operating frequency, wherein the useful mode operating frequency depends on the density of a medium guided in the measuring tube and on at least one disturbance variable;
   Determining (320) a characteristic value of the useful mode operating frequency;
   Determining (330) a value representing the disturbance variable;
   Calculating (340) a correct density value of the medium as a function of the characteristic value of the useful mode operating frequency and the value representing the at least one disturbance variable;
   **characterized in that** the method further comprises:

   Calculating (350) a characteristic value of the standard frequency as a function of the correct density value, where the standard frequency is the frequency which gives the correct density value when the density is calculated using a frequency-dependent standard function which is not dependent on the disturbance variable;
Providing (360) a signal that represents the standard frequency,
wherein the provided signal controls an oscillator which outputs an oscillator signal oscillating at the standard frequency in response to the provided signal; and
Calculation (370) of the density by means of a processing unit which has a frequency input to which the oscillator signal is applied, which is compared with the standard frequency input.
frequency, whereby the processing unit calculates the density using the standard function.

2. Method according to claim 1, wherein the at least one disturbance variable influences an effective stiffness of the measuring tube with respect to the bending vibration useful mode and/or the measuring tube volume.

3. Method according to claim 2, wherein the at least one disturbance variable comprises a pressure prevailing in the measuring tube and/or a temperature of the measuring tube.

4. Method according to claim 1, wherein the at least one disturbance variable is
   a
   viscosity is a flow velocity, a gas load and/or a compressibility of the medium guided in the measuring tube.

5. Method according to one of the preceding claims, wherein the at least one disturbance variable is an ambient temperature acting on the measuring device from the outside
   and/or a force and/or a bending moment.

6. Method according to one of the preceding claims, wherein the useful mode operating frequency comprises a useful mode natural frequency f1 or a frequency at which a phase angle of constant magnitude |p| arises between an excitation force and the useful mode operating frequency f1.
   deflection of the measuring tube is set for the $45° - a45° + a$ frequency, where 6 $10°$.

7. The method according to any one of the preceding claims, wherein the standard function comprises a polynomial in $t = 1/f$ or in $t^2 = 1/€$, wherein f is a frequency
   and t is the associated period duration.

## Revendications

**1.** Méthode (300) de calcul de la densité d'un milieu guidé dans au moins un tube de mesure oscillant d'un densimètre :

Excitation (310) de vibrations de flexion du tube de mesure dans un mode utile de vibration de flexion à une fréquence de fonctionnement du mode utile, la fréquence de fonctionnement du mode utile dépendant de la densité d'un fluide guidé dans le tube de mesure et d'au moins une variable de perturbation ;
Détermination (320) d'une valeur caractéristique de la fréquence de fonctionnement en mode utile ;
Détermination (330) d'une valeur représentant la variable de perturbation ;
Calcul (340) d'une valeur de densité correcte du milieu en fonction de la valeur caractéristique de la fréquence de fonctionnement du mode utile et de la valeur représentant l'au moins une variable de perturbation ;
**caractérisée par le fait que** la méthode comprend en outre
Calcul (350) d'une valeur caractéristique de la fréquence standard en fonction de la valeur correcte de la densité, la fréquence standard étant la fréquence qui donne la valeur correcte de la densité lorsque celle-ci est calculée à l'aide d'une fonction standard dépendant de la fréquence et ne dépendant pas de la variable perturbatrice
Fournir (360) un signal qui représente la fréquence standard,
dans lequel le signal fourni commande un oscillateur qui émet un signal oscillant à la fréquence standard en réponse au signal fourni ; et
Calcul (370) de la densité au moyen d'une unité de traitement qui dispose d'une entrée de fréquence à laquelle est appliqué le signal de l'oscillateur, qui est comparée à l'entrée de fréquence standard.

fréquence, l'unité de traitement calculant la densité à l'aide de la fonction standard.

**2.** Méthode selon la revendication 1, dans laquelle au moins une variable perturbatrice influence une rigidité effective du tube de mesure par rapport au mode utile de vibration de flexion et/ou au volume du tube de mesure.

**3.** Méthode selon la revendication 2, dans laquelle au moins une variable perturbatrice comprend une pression régnant dans le tube de mesure et/ou une température du tube de mesure.

**4.** Méthode selon la revendication 1, dans laquelle au moins une variable de
perturbation est une
La viscosité est une vitesse d'écoulement, une charge de gaz et/ou une compressibilité du fluide guidé dans le tube de mesure.

**5.** Procédé selon l'une des revendications précédentes, dans lequel l'au moins une variable perturbatrice est une température ambiante agissant sur le dispositif de mesure depuis l'extérieur
et/ou une force et/ou un moment de flexion.

**6.** Procédé selon l'une des revendications précédentes, dans lequel la fréquence de fonctionnement du mode utile comprend une fréquence propre du mode utile f1 ou une fréquence à laquelle un angle de phase de grandeur constante Ipl apparaît entre une force d'excitation et la fréquence de fonctionnement du mode utile f1.
la déviation du tube de mesure est réglée pour la fréquence 45° - a45° + a, où 6 10°.

**7.** La méthode selon l'une des revendications précédentes, dans laquelle la fonction standard comprend un polynôme en t = 1/f ou en $t2 = 1/€$, où f est une fréquence.
et t est la durée de la période associée.

**FIG. 1**

**FIG. 2**

**Fig. 3**

**Fig. 4**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2016356686 A1
- WO 94121999 A1
- US 4262523 A1
- DE 102015122661 A1
- DE 102014019396 A1
- DE 102016112600
- DE 102004056235 A1
- DE 102016109251